# EUROPEAN PATENT SPECIFICATION

(11) **EP 1 126 003 B1**
(45) Date of publication and mention of the grant of the patent: **28.04.2004**
(21) Application number: 01103513.6
(22) Date of filing: 15.02.2001
(51) Int. Cl.: C09K 3/14, B24D 3/04

(54) **Resin bonded abrasive tool**
Kunstharzgebundenes Schleifwerkzeug
Outil abrasif à liant à base de résine

(30) Priority: 16.02.2000 JP 2000038653
(43) Date of publication of application: 22.08.2001
(73) Proprietor: MITSUBISHI MATERIALS CORPORATION, Chiyoda-ku, Tokyo (JP)
(72) Inventor: Takahashi, Tsutomu, Iwaki Plant, Mitsubishi, Izumi-cho, Iwaki-shi, Fukushima-ken (JP); Takano, Toshiyuki, Iwaki Plant, Mitsubishi, Izumi-cho, Iwaki-shi, Fukushima-ken (JP); Nakamura, Masato, Iwaki Plant, Mitsubishi, Izumi-cho, Iwaki-shi, Fukushima-ken (JP)
(74) Representative: HOFFMANN - EITLE

(56) References cited:
- US-A- 5 095 665
- PATENT ABSTRACTS OF JAPAN vol. 1999, no. 03, 31 March 1999 (1999-03-31) & JP 10 330732 A (HITACHI CHEM CO LTD), 15 December 1998 (1998-12-15)
- DATABASE WPI Section Ch, Week 199347 Derwent Publications Ltd., London, GB; Class A88, AN 1993-374032 XP002167885 & JP 05 277956 A (MITSUBISHI MATERIALS CORP), 26 October 1993 (1993-10-26)
- PATENT ABSTRACTS OF JAPAN vol. 017, no. 026 (M-1354), 19 January 1993 (1993-01-19) & JP 04 250981 A (TOYODA MACH WORKS LTD), 7 September 1992 (1992-09-07)
- PATENT ABSTRACTS OF JAPAN vol. 013, no. 477 (M-885), 27 October 1989 (1989-10-27) & JP 01 188272 A (SEMICONDUCTOR ENERGY LAB CO LTD), 27 July 1989 (1989-07-27)

## Description

### BACKGROUND OF THE INVENTION

### Field of the Invention

This invention relates to the resin bonded abrasive tool particularly used for miller grinding of hard and brittle materials for example. The disclosure of Japanese Application No. H11-230909 , H11-246748 ,and 2000-038653 is hereby incorporated by reference into the present application .

### Description of the Background

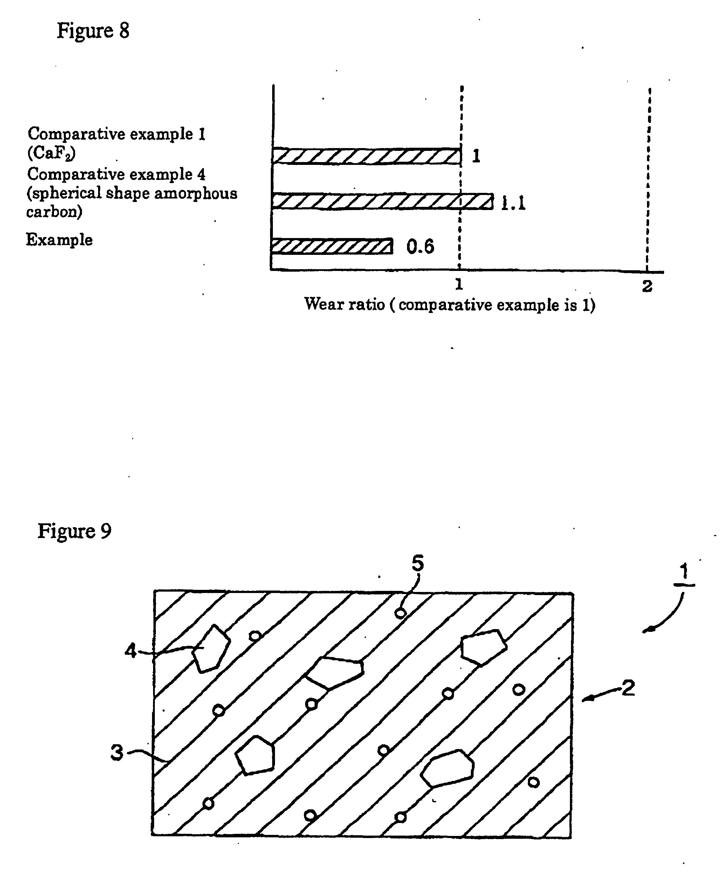

The resin bonded abrasive tool is produced by the following method. The raw powders of thermosetting resin, such as, for example, an epoxy resin and phenol resin are mixed with the super abrasive grains of a diamond and CBN, etc. , and is molded independently, or with the base metal if needed. After that, it is pressed and sintered. As a result, the resin bonded abrasive tool forming the super abrasive grains layer is produced.
When the grinding is performed on comparatively hard work materials, the resin bonded phase holding the super abrasive grains is crushed or worn out. The super abrasive grains drop out rather than the sharpness falls by the wear in a tip of the super abrasive grain, because, in a resin bonded tool, the resin bonded phase holding the super abrasive grains is comparatively elastic and brittle. Therefore, although resin bonded tool has a difficulty with intense wear, clogging on the surface of grinding and drop in the sharpness of the super abrasive grain by wear rarely occurs. It is able to perform grinding efficiently as compared with metal bonded tool etc. Moreover, the damage of work materials is small and the finished surface is good ,since the elastic effect is in the super abrasive grains held by the resin bonded phase. Therefore, it has the advantage of being used for the grinding where small surface roughness, such as miller grinding of work materials of semi conductor wafer for example, is required. By the way, in the conventional resin bonded tools, it is known that there is a resin bonded tool in which a solid lubricant, such as hBN and graphite for example, is a filler that is dispersed inside the resin bonded phase in order to control the frictional heat generated by grinding resistance
For example, in the resin bonded tool 1 shown in Figure 9, diamond abrasive grain 4 is dispersed inside the resin bonded phase 3 consisted of phenol resin as grain layer 2. The solid lubricant 5 such asCaF2 (calcium fluoride) etc. is also added and further distributed. In case grinding by using this resin bonded abrasive tool, the solid lubricant 5 inside the resin bonded phase 3 has a function as a lubricant by omitting one by one the resin bonded phase 3 and abrasive grain 4 and thus the grinding is smoothly performed by super abrasive grain 4, and this also may controll the friction heat of grain layer 2 and the work material.
JP 10 330732 A relates to a friction material composition and the friction material made thereof. It is described that a thermosetting resin such as a furan resin, a phenolic resin, an epoxy resin, an unsaturated polyester resin or a melamine resin is mixed with a curing agent such as trichloroacetic acid or p-toluenesulfonic acid and silicon carbide, and the mixture is carbonized and subjected to high-temperature treatment in an inert atmosphere and the product is ground to obtain a grinding agent containing glassy carbon and silicon carbide. The grinding agent is mixed with reinforcing fibers such as glass fibers or ceramic fibers, lubricant such as graphite, antimony sulfide or molybdenum sulfide, a filler, a binder such as phenolic resin and optionally curing agent such as hexamethylenetetramine.
JP 05 277956 A is concerned with a resin bond grindstone having an abrasive grain layer formed by dispersing super abrasive grains in a resin bond phase. A globular filler such as glass, carbon, or plastics is dispersed into the resin bond phase. The resin bond phase comprises phenol-based or polyimide-based thermosetting or thermoplastic resin.
JP 04 250981 A relates to super abrasive grain-grinding wheel. An aggregate is formed out of carbon or diamond powder coated with metal or ceramics. This aggregate and diamond abrasive grains or CBN abrasive grains are combined together through a binder to make the desired super abrasive grain grinding wheel.

### Object of This Invention

However, although cutting resistance can be reduced by the addition of a solid lubricant which distributed as a filler in resin bonded abrasive tools of the above mentioned composition, it occurs that the problem of the life of the abrasive tool decreases because the binder phase of the resin is easy to become brittle itself and the effect to increase the wear resistance of abrasive particle layer is luck .
This invention aims at offering resin bonded abrasive tools which can increase wear resistance and reduce the grinding resistance .

### Summary of the Invention

In order to attain the purpose which solves the above mentioned subject , the resin bonded abrasive tool of this invention is characterized by distributing amorphous carbon in the above mentioned resin binder phase in resin bonded abrasive tools which comes to distribute super abrasive particle in the resin binder phase . In the resin bonded abrasive tool of the above mentioned composition, the amorphous carbon (hereinafter, same to glassy carbon ) has the characteristics that the bending strength is at about 16 kg/mm² and the value is as large as about 5 times that of graphite ( crystal carbon ) ,and the compressive strength is at about 120 kg / mm² and the value is about as large as about 20 times that of graphite ,and the modulus of elasticity is at about 3 times that of graphite ,and the shore hardness Hs is at about 110 and the value is about 3 times that of graphite. Here, the binder phase of the resin bonded abrasive tool is made, for example, from phenol resin, the modulus of elasticity of the phenol resin is at about 7 × 102 kg / mm2 , it can raise the rate of modulus of elasticity of abrasive particle layer of resin bonded abrasive tool by adding and distributing amorphous carbon in resin binder phase of resin bonded abrasive tool . By this , the compressive rigidity of the abrasive particle layer can be raised. The abrasive particle layer can carry out compressive deformation by grinding resistance at the time of grinding machining , or it can prevent that the super abrasive particle is buried into resin binder phase even if it is the case where the super abrasive particle projects from the surface of abrasive particle layer and is made into the cutting tooth of resin bonded abrasive tool and is received the grinding resistance , the mechanical strength of abrasive particle layer holding super abrasive particle can be raised . Furthermore, the amorphous carbon distributed in resin binder phase acts as a lubricant, and can reduce the grinding resistance between work materials, and can control the generation of grinding heat. In addition, for example, it can control more effectively the deformation of resin bonded abrasive tool, or the wear of the tool because the hardness , compressive strength, and bending strength of amorphous carbon is large compared with solid lubricant such as graphite Furthermore, the resin bonded abrasive tool in this invention has the characteristics that the above mentioned amorphous carbon is the shape of spherical type. In the above mentioned resin bonded abrasive tool, the compressive strength of resin binder phase can be increased by the spherical amorphous carbon, and it is also possible to relieve the stress that acts on the abrasive particle layer at the time of grinding machining .

Moreover, as the spherical amorphous carbon which is exposed from the surface of abrasive particle layer as it contacts with the grinding surface of work materials, the frictional resistance is small and the generation of frictional heat is reduced even if the friction with the work materials increases. Moreover , if the resin binder phase that holds spherical amorphous carbon on the surface of abrasive particle layer is worn out and approximately half grade of the whole volume of the spherical amorphous carbon comes to project from the surface of abrasive particle layer , this amorphous carbon will be omitted from the surface of abrasive particle layer , and a tip pocket will be formed in the position where the amorphous carbon was held . Compared with the thing of the non-uniform shape by which unevenness was formed , for example , on the outside surface, the holding force by resin binder phase is decreased and the omission from the resin binder phase is promoted because the amorphous carbon is spherical. The discharge ability of scraps improves because the grinding liquid introduced at the time of grinding machining, or grinding waste etc., enters into the formed tip pockets.

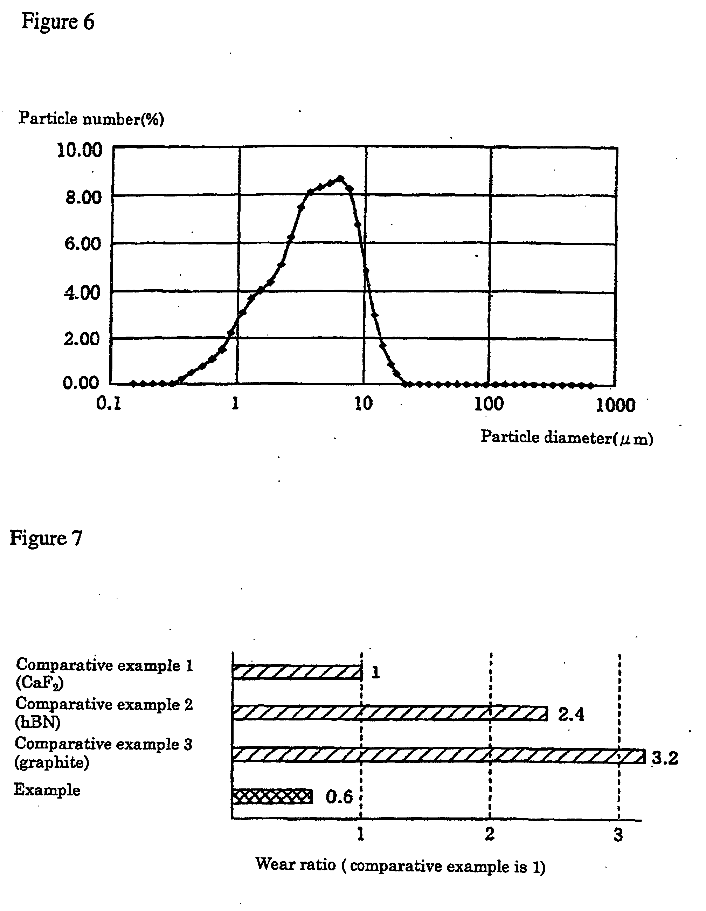

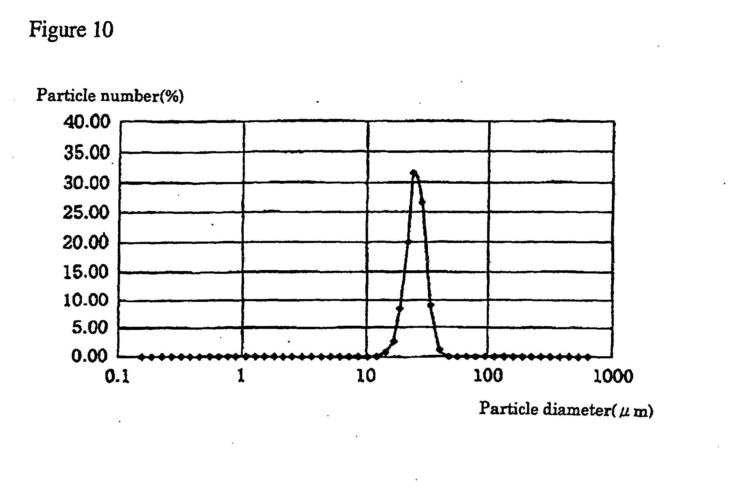

On the other hand , as the amorphous carbon is spherical, the compressive strength is high compared with non-uniform type, the grinding load and the deformation by grinding can be controlled , or it can prevent effectively burying super abrasive particle which exists on the outside surface into the resin binder phase. Furthermore , the mobility and formability of raw materials can be raised in case that the abrasive particle layer is formed . Furthermore, the resin bonded abrasive tool has the characteristics that the above mentioned amorphous carbon is of a non-uniform shape .
In the resin bonded abrasive tool mentioned above , particularly , in case that the minute amorphous carbon is dispersed in the resin binder phase , the spherical amorphous carbon has the tendency of dropping out from the resin binder phase, thus the holding force can be raised by using the amorphous carbon of non-uniform shape. Furthermore, the resin bonded abrasive tool in this invention has the characteristics that the amorphous carbon of the above mentioned non-uniform shape is prepared by grinding the spherical amorphous carbon . Although the minute and spherical amorphous carbon has the problem that the manufacture is difficult and moreover tends to drop out from resin binder phase, for example, the non-uniform shape amorphous carbon which has a particle size distribution which is shown in Figure 7, can be obtained easily by crushing the spherical amorphous carbon against that the mean particle diameter about 20 ∼30 µm shown in Table 1 and Figure 10 is general , the holding force of resin binder phase can thus be raised and the wear resistance of resin bonded abrasive tool can be increased .
Spherical amorphous carbon is the most precise and minute shape amorphous carbon can be obtained by crushing the spherical amorphous carbon . Furthermore, the resin bonded abrasive tool in this invention has the characteristics that the particle diameter of above mentioned non-uniform shape amorphous carbon is 20µm or less .
If the particle diameter of the amorphous carbon of non-uniform shape distributed in resin binder phase exceeds 20µm in above mentioned resin bonded abrasive tool, the contact length of work material and resin may increase and the grinding resistance may increase. However, by setting particle diameter to 20 µm or less, the amorphous carbon is arranged in a narrow pitch and the contact with the work material and the resin is controlled, as a result, the grinding resistance is reduced and the generation of grinding heat is controlled , and also the wear resistance of resin bonded abrasive tool can be raised . Furthermore , the resin bonded abrasive tool of this invention has a characteristic that a metal of Cu or Ag or Ni or Co or the alloy including these metals is coated on a surface of the above mentioned amorphous carbon . In the above-mentioned resin bonded abrasive tool , the amorphous carbon coated by a metal which has a high thermal conductivity is distributed in the abrasive particle layer, thus, the thermal conductivity of abrasive particle layer can be raised , the heat which occurs at the time of grinding machining can be dissipated quickly from the abrasive particle layer, and the deterioration of the resin binder phase can be prevented . Furthermore , the resin bonded abrasive tool in this invention has a characteristic that the volume ratio of the above mentioned amorphous carbon to the above-mentioned resin binder phase except for that of the super abrasive particles is 5 ∼60 vol % . In the above-mentioned resin bonded abrasive tool, if the amorphous carbon becomes less than 5 vol % , the effect which controlls the generation of the wear heat based on the decreasing of the grinding resistance and improves the wear resistance of abrasive particle layer is weak , in case that the volume excees 60 % conversely, since the the ratio of resin binder phase which occupies in abrasive particle layer will decrease, the strength of the abrasive particle layer decreases , and the wear resistance of abrasive particle layer also decrease, and economical efficiency falls . Furthermore , the resin bonded abrasive tool in this invention has a characteristics that the hardness of amorphous carbon is Hs=100∼120 in shore hardness scale. In above mentioned resin bonded abrasive tool, the amorphous carbon is produced by baking phenol formaldehyde resin at 600 °C: ∼ 3000 ° C. If it is baked below 600 ° C, the shore hardness becomes less than 100, and since the hardness of amorphous carbon is small, the deformation of the resin bonded abrasive tool and inclination wear cannot be controlled and since the lubricity is low, the generation of grinding heat by the decreasing grinding resistance between work materials cannot be controlled . On the other hand , hardness is as high as that which was baked at high temperature, and it serves as amorphous carbon which is excellent in lubricity . Furthermore, the resin bonded abrasive tool in this invention has a characteristic that the wear resistant filler more than a kind at least in the above mentioned resin binder phase .
In this resin bonded abrasive tool , hard wear resistant filler is also distributed. As a result, the strength of the abrasive particle layer is raised and this can reduce the wear as amorphous carbon is distributed. As a result, the decreasing of grinding resistance without the decreasing grinding ratio . Furthermore , the resin bonded abrasive tool in this invention has a characteristic that the above mentioned wear resistant filler includes more than a kind at least of SiC, SiO2, Ag, Cu, Ni .
In above mentioned resin bonded abrasive tool, since more than a kind at least of SiC, SiO2, Ag, Cu, Ni as the filler is included , the wear of abrasive particle layer is better controlled, and can control the prolongation of abrasive tool life . Furthermore, the resin bonded abrasive tool in this invention has a characteristic that the lubricative filler more than a kind at least is distributed in resin binder phase . In above mentioned resin bonded abrasive tool, since the lubricative filler is distributed, the grinding resistance is reduced , and the grinding ratio can be raised without increasing grinding resistance by distributing amorphous carbon to resin bonded abrasive tool with the sufficient sharpness planned so that the grinding of the work material by super abrasive particle could be smoothly performed at the time of grinding. Furthermore, the resin bonded abrasive tool in this invention has a characteristics that the above mentioned lubricative filler includes more than a kind at least of graphite , hBN, fluoro -resin . In above mentioned resin bonded abrasive tool , since more than a kind at least of graphite , hBN , fluoro-resin as lubricative filler , the grinding resistance is reduced much more and can be obtained the resin bonded abrasive tool which is excellent in sharpness ,which can perform the grinding of work material smoothly . Furthermore, the resin bonded abrasive tool in this invention has a characteristic that pores are preferably included 5 ∼ 40 vol % in resin binder phase . The pores can be formed by adding a blowing agent to the phenol-formaldehyde resin. During baking the phenol-formaldehyde resin, the blowing agent decomposes evolving gas. In this resin bonded abrasive tool , the pores have effects such as inducing the grinding liquid on a surface of abrasive particle layer , and improvement in the discharge ability of tip, and prevention of condensation with work material, as the results, by the synergistic effect with the amorphous carbon, reduces the grinding resistance much more and has an remarkable effect in an improvement of the grounded surface roughness of work material .
Here, if the pore volume is less than 5 vol % , the effect mentioned above is weak , in case that the pore volume exceed 40 vol %, the strength of the abrasive particle layer will decrease . Furthermore, the resin bonded abrasive tool in this invention has a characteristic that the hollow glass is distributed in resin binder phase . In this composition , the part of the hollow glass which exposed from the surface of the abrasive particle layer is destroyed by the contact with work material at a time of grinding, and as a result, the tip pocket is formed and the discharge ability of the tip can be improved. In addition, the strength of the abrasive layer that was decreased by the addition of hollow glass can be raised by the addition of amorphous carbon simultaneously , it can be possible to obtain the resin bonded abrasive tool excellent in sharpness . In addition , In case that the lubricative filler is distributed in resin binder phase adding to hollow glass , Although there are the case where the strength decreases even to the point where the strength of abrasive particle layer becomes weaker and practical use is not possible , for example, by exchanging a part of lubricative filler such as graphite to amorphous carbon the strength of abrasive particle layer ,in particular, the compressive strength can be raised , and the resin bonded abrasive tool excellent in sharpness can be obtained.

### Brief Description of the Drawings

Table 1 shows a particle size distribution of spherical amorphous carbon .

Table 2 shows a particle size distribution of non- uniform shape amorphous carbon .

Figure 1 is an enlarged sectional view of the principal part shown as one example of resin bonded abrasive tool concerning this invention .

Figure 2 is a part of the sectional view of cup type abrasive tool in which an abrasive particle layer is equipped to the base plate shown in Figure 1 .

Figure 3 is a sectional view of amorphous carbon which has the metal coating layer shown in Figure 1 .

Figure 4 is an enlarged sectional view of the principal part shown as the 1st modification of resin bonded abrasive tool of this example .

Figure 5 is an enlarged sectional view of the principal part shown as the 2nd modification of resin bonded abrasive tool of this example .

Figure 6 shows the particle size distribution of the non- uniform shape amorphous carbon which forms the filler shown in Figure 5 .

Figure 7 is the wear ratio of the resin bonded abrasive tool of the example according to this invention and comparative example 1, 2, 3 .

Figure 8 is the wear ratio of the resin bonded abrasive tool of the example according to this invention and the comparative example 1, 4.

Figure 9 is a sectional view shown a conventional resin bonded abrasive tool.

Figure 10 is a particle size distribution of the spherical amorphous carbon used as filler for the resin bonded abrasive tool of one example of conventional technology .

### Explanation of Mark

- 10, 20, 30 :: Resin bonded tool
- 11, 21, 31 :: Abrasive particle layer
- 14 :: Resin binder phase
- 15 :: Super abrasive particle
- 16 :: wear resistant filler
- 17 :: Hollow glass
- 18 :: Metal coated layer
- 19: : Amorphous carbon
- 22 :: Lubricative filler
- 36 :: Filler

### Brief Description of the Preferred Embodiments

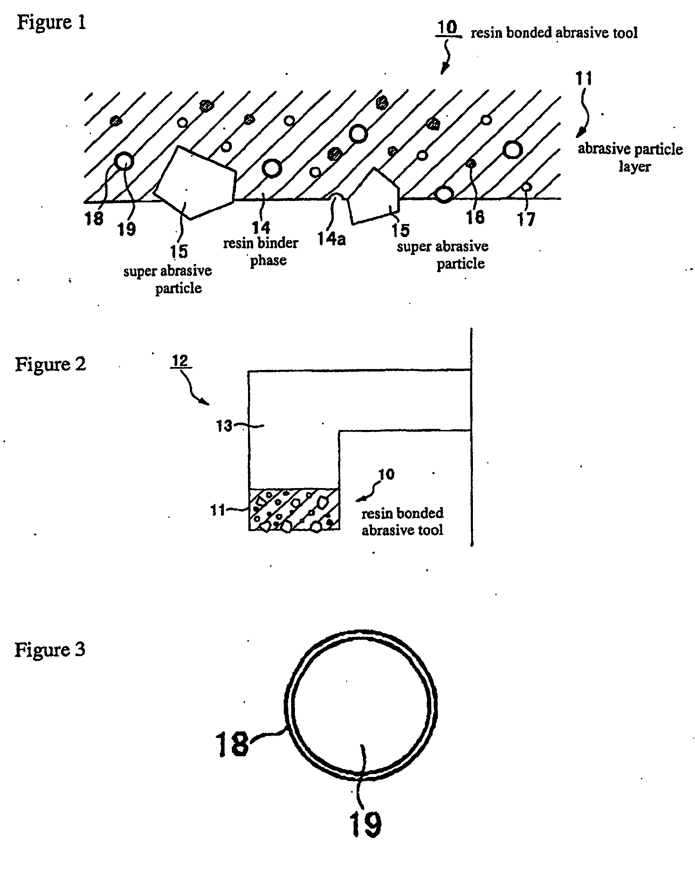

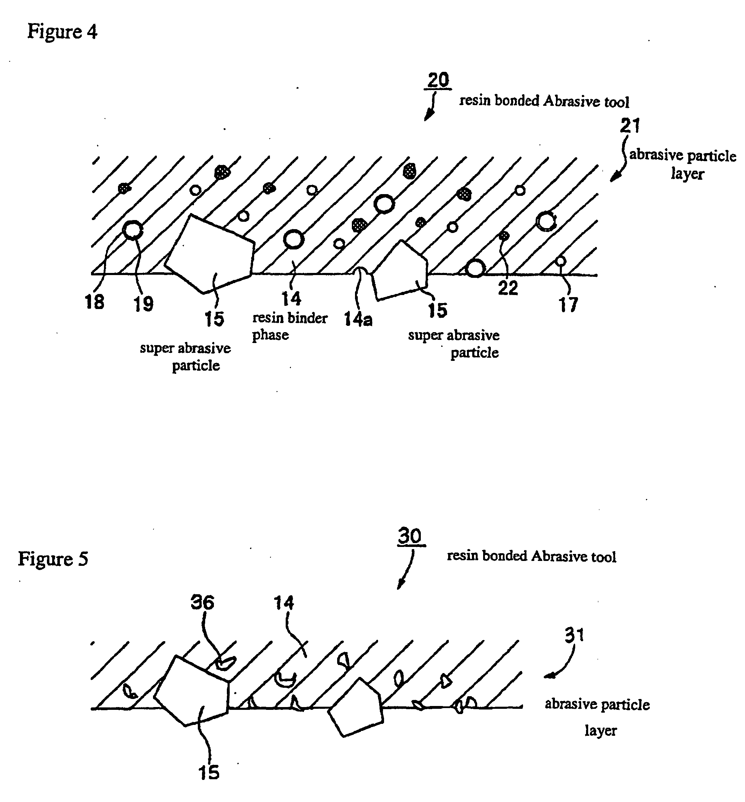

Referring to the appending drawings, the example of resin bonded abrasive tool according to this invention is explained. Figure 1 is an enlarged sectional view of a principal part of one example of the resin bonded abrasive tool 10 concerning to this invention , and Figure 2 is a sectional view of a part of cup type abrasive tool 12 in which the abrasive particle layer 11 is equipped with the base plate shown in Figure 1 , and Figure 3 is a sectional view of an amorphous carbon 19 which has the metal coating layer 18 shown in Figure 1
Resin bonded abrasive tool 10 according to this invention is , for example , the abrasive tool using for miller grinding of hard and brittle material. The abrasive particle layer may be fixed to the tip part of almost ring like of the base plate 13 in cup type abrasive tool 12 shown in Figure 2, for example, and the abrasive tool may be constituted by only the abrasive particle layer 11 without forming base plate 13.
And as shown in Figure 1 , the abrasive particle layer 11 is equipped with resin binder phase 14 which consists of heat-hardening resin such as phenol resin etc., for example, and super abrasive particles 15 of diamond ( or cBN etc. ) which is distributed in this resin binder phase 14 .
Furthermore , wear resistant filler 16, and hollow glass 17, and amorphous carbon 19 that has the metal coating layer 18 are distributed in resin binder phase 14, respectively . Although the wear resistant filler 16 is not particularly limited, it is desirable that it consists of hard filler of SiC , SiO2 , Ag, Cu , Ni which is more than a kind at least, and it is SiC, for example. As shown in Figure 3 , it consists of the metal coating layer 18 on the surface of the amorphous carbon 19 , this metal coating layer 18 consists of a metal of either Cu , Ag, Ni, Co or the metal including these alloy, and it is referred to as Cu. It is assumed that the amorphous carbon 19 is spherical , for example, and although the particle diameter is not particularly limited , the particle diameter is set preferably in the range of 1 / 10 ∼ 2 of the particle diameter of super abrasive particle 15 . If the particle diameter of amorphous carbon 19 is less than 1 / 10 of the particle diameter of super abrasive particle 15 , the effect of decreasing the grinding resistance and control the generation of grinding heat and also the effect of increasing the wear resistance are weak. Conversely, if it is more than 2 times of the particle diameter of the super abrasive particle 15, the distributed pitch of amorphous carbon 19 will be extended , and the contact length between work material and resin binder phase 14 will be increased, and the increasing of grinding resistance will be brought . The total amount of amorphous carbon 19 is made into 5 ∼ 60 vol % by the volume ratio of resin binder phase 14 except super abrasive particle 15 of abrasive particle layer 11 .
If the quantity of amorphous carbon 19 is less than 5 vol % , the effect which include amorphous carbon 19 , for example, the decreasing of grinding heat and the increasing of wear resistance are not sufficient. Moreover, if the quantity of amorphous carbon 19 exceeds 60 vol % , the rate of resin binder phase 14 occupied in abrasive particle layer 11 will increase. As a result, the strength of abrasive particle layer 11 falls sharply and wear resistance of abrasive particle layer 11 drops .
Furthermore , the shore hardness of amorphous carbon 19 is set to Hs = 100∼120. If the shore hardness is less than 100, the deformation and partial wear of resin bonded abrasive tool 10 cannot be controlled, because the hardness of amorphous carbon 19 is small. In addition, the decreasing of the generation of grinding heat by the decreasing of grinding resistance between works can not be controlled , because the lubricity is low . In addition, amorphous carbon 19 is produced by baking of phenol- formaldehyde resin at a temperature of 600 °C ∼3000 ° C. If the baking temperature is below 600 ° C, the shore hardness Hs becomes less than 100. The amorphous carbon 19 baked at more high temperature has higher hardness and is excellent in lubricity. Preferably, the baking temperature is more than 700 ° C. In this case, it is possible to get amorphous carbon 19 which shore hardness Hs is 100∼120.
Thus , in the resin bonded abrasive tool 10 in this example , the frictional resistance between working face and the surface of abrasive particle layer 11 in case of grinding machining is controlled, and the lubricity of resin binder phase 14 to work material can be held. It is possible to control increasing of grinding heat, and also to raised the wear resistance of abrasive particle layer 11 . The amorphous carbon 19 has a higher elastic modulus than that of phenol resin, for example, which forms resin binder phase 14. Therefore, the elastic modulus of abrasive particle layer 11 can be raised, and also the compressive rigidity of abrasive particle layer 11 can be raised, and the mechanical strength of abrasive particle layer 14 which hold the super abrasive particle 15 can be raised.
And as the amorphous carbon 19 is spherical shape , it can relieve the stress which acts to the abrasive particle layer 11 . Furthermore, in addition that the amorphous carbon 19 acts as lubricant and decrease the grinding resistance between works. As a result, control of the generation of grinding heat , for example, it can be efficiently control the deformation of resin bonded abrasive tool 10 and partial wear as the hardness and compressive strength , bending strength etc. is higher than that of solid lubricants such as graphite for example etc. And as the spherical amorphous carbon 19 which exposes from the surface of abrasive particle layer 11 point contacts with the grinding surface of work, even if the friction with work is occurred , the wear resistance is small and the generation of frictional heat is suppressed small . Furthermore, for example, in comparison to the non-uniform type lubricant which forms uneveness on a outer surface, the holding force by resin binder phase 14 is decreased, as a result, the omission from resin binder phase 14 are promoted , and the tip pocket 14a is formed , and the discharge ability of chip can be raised. Moreover , as the amorphous carbon 19 which is coated with a metal such as Cu etc. that has the high thermal conductivity is distributed in abrasive particle layer 11, the thermal conductivity of the abrasive particle layer can be raised and it is possible to emit quickly the grinding heat generated in a time of grinding machining from the abrasive particle layer 11 and it can prevent the heat degradation of resin binder phase 14.
Moreover , as the total amount of amorphous carbon 19 is made into the range of 5 ∼ 60 vol % in a volume ratio of resin binder phase 14 except super abrasive particle 15 of abrasive particle layer 11, it can prevent to become not enough the effect of decreasing of grinding heat and increasing of wear resistance as in case of below 5 vol % and to be occurred the fault which the wear resistance of abrasive particle layer 11 by decreasing sharply of the strength of abrasive particle layer 11 as in case of exceed 60 vol %.
Furthermore, as the shore hardness Hs of amorphous carbon 19 is set to Hs = 100∼120 , it is possible to prevent the deformation of resin bonded abrasive tool 10 and the partial wear in case of less than 100 of shore hardness , and it is also possible to control the generation of grinding heat between works . Furthermore, the grinding resistance can be decreased without decreasing the grinding ratio, because that amorphous carbon 19 is distributed in case that the wear resistant hard filler 16 is added to the resin binder phase 14 and the wear of abrasive particle layer 11 is reduced and the life of abrasive tool is prolonged .
In addition , in this example , wear resistant filler 16 is distributed in resin binder phase 14, but it may not be limited to this. As the enlarged sectional view of a principal part of resin bonded abrasive tool 20 regarding the first modification of this example is shown in Figure 4, the lubricative filler 22 and hollow glass 17 and amorphous carbon 19 having metal coated layer 18 are distributed in a resin binder phase 14 . Here , although the lubricative filler 22 is not especially limited, but more than a kind of filler of graphite ,and hBN ,and fluoro-resin is desirable, and for example, it considers as graphite . In this case , the grinding resistance is reduced by lubricative filler 22 distributed in resin binder phase 14 and the resin bonded abrasive tool 20 has excellent sharpness that is planned smoothly the grinding of work by super abrasive particle 15 at the time of grinding.
In addition, as the amorphous carbon 19 is also added, the grinding ratio can be raised without increasing the grinding resistance.
And, in addition , the discharge ability of chip can be raised by forming a chip pocket on the surface of abrasive particle layer 21 based on the destruction of hollow glass 17. The strength of abrasive particle layer 21 which has decreased due to the addition of hollow glass 17 can be raised by amorphous carbon 19. As a result, it is possible to obtain resin bonded abrasive tool 20 which is excellent in sharpness and which is also improved in the strength of the abrasive tool , particularly , in compressive strength .
In addition , in this example mentioned above , although the hollow glass 17 and wear resistant filler 16 or lubricative filler 22 are distributed in a resin binder phase 14, it may not be limited to this; hollow glass 17 and wear resistant filler 16 and lubricative filler 22 may be omitted.
Furthermore , in this example , although the metal coated layer 18 is formed on the surface of amorphous carbon 19, it may not be limited to this, metal coating layer 18 may be omitted . Moreover in this example , although the hollow glass 17 is distributed in resin binder phase 14 , it may not be limited to this , the pore of 5 ∼40 vol % in spite of hollow glass may be contained . In this case , the elasticity of abrasive particle layer 11, 21 can be raised , and it has a remarkable effect in improvement of surface roughness in grinding of work . Here , if the pore is less than 5 vol % , the effect mentioned above is weak. Conversely , in case that the pore exceeds 40 vol % , the strength of abrasive particle layer will decrease .
Next, the results which grinding resistance and grinding ratio measured to each of this resin bonded abrasive tool in this invention and one example in conventional tool. First the super abrasive particle of diamond 15 is distributed in a resin binder phase 14 which consists of heat hardenable resin such as phenol resin etc. This abrasive tool is called as first comparative example. The first example is the resin bonded abrasive tool where the amorphous carbon 19 is distributed in a resin binder phase 14 of the resin bonded abrasive tool which is the first comparative example.
The cutting resistance in the first example decreased to 1 / 2 of that of the first comparative example. And the grinding ratio in the first example improved 50 % of that of the first comparative example.
Next, the second comparative example is a resin bonded abrasive tool where the graphite as the lubricative filler 22 is distributed in a resin binder phase 14 of the resin bonded abrasive tool of the first comparative example.
The second example is a resin bonded abrasive tool whose amorphous carbon 19 is distributed in a resin binder phase 14 of resin bonded abrasive tool of the second comparative example . The cutting resistance in the second example became almost equivalent to that of the second comparative example , and the grinding ratio in the second example improved twice of that of the second comparative example , and also the maintenance nature of resin bonded abrasive tool improved . Furthermore , the third comparative example is a resin bonded abrasive tool where the hollow glass 17 is distributed in a resin binder phase 14 of the resin bonded abrasive tool of the second comparative example . The third example is a resin bonded abrasive tool where 1 /2 ∼ 3 / 4 of the added content of graphite which is added as the lubricative filler 22 is distributed in a resin binder phase 14 of a resin bonded abrasive tool in the 3 rd comparative example is changed to amorphous carbon 19 . . Next , the strength of abrasive tool in the third comparative example is too much to weak and is not used in practice.
However, in the third example, the strength of abrasive tool, particularly the compressive strength, was able to improve and the resin bonded abrasive tool excellent in sharpness was able to be obtained.
Next, the 4th comparative example is a resin bonded abrasive tool where SiC as wear resistant filler 16 is distributed in a resin binder phase 14 of resin bonded abrasive tool in the first comparative example .
The 4 th example is a resin bonded abrasive tool where amorphous carbon 19 is distributed in a resin binder phase 14 of a resin bonded abrasive tool in this 4 th comparative example , the cutting resistance in this 4th example became 1 /2 of that of 4th comparative example , and the cutting ratio in the 4th example is almost equivalent to that of 4th comparative example . Moreover, the 5th comparative example is a resin bonded abrasive tool where SiC and Cu as the wear resistant filler 16 is distributed in resin binder phase 14 of resin bonded abrasive tool of the first comparative example . The 5th example is a resin bonded abrasive tool where the amorphous carbon 19 is distributed in a resin binder phase 14 of a resin bonded abrasive tool of the 5th comparative example. The cutting resistance of the 5th example became 2 / 5 of that of the 5th comparative example , and the grinding ratio was almost equivalent . And the 6th comparative example is a resin bonded abrasive tool where the hollow glass 17 as pore is distributed in a resin binder phase 14 of resin bonded abrasive tool of the 4th comparative example. . The 6th example is a resin bonded abrasive tool where the amorphous carbon 19 is distributed in a resin binder phase 14 of a resin bonded abrasive tool of this 6th comparative example. The cutting resistance in the 6 th example became 3 / 5 of that of the 6th comparative example , and the grinding ratio was almost equivalent . Moreover , the 7th example is a resin bonded abrasive tool where the pore is formed by using the foaming agent etc. in forming of resin binder phase 14 in spite of the hollow glass 17 in resin bonded abrasive tool in 6th example .
The surface roughness in the surface of grinding in 7th example was improved by 10 % compared to that of the 6th example , and the surface roughness in the 7 th example was improved by 30 % of that of the 6th comparative example . From the results mentioned above , by distributing the amorphous carbon 19 in a resin binder phase 14, it is possible to decrease the cutting resistance , and it is possible to improve the grinding ratio without increasing the grinding resistance of the resin bonded abrasive tool which is excellent in sharpness. On the other hand, it can check that grinding resistance can be reduced without reducing the grinding ratio of a resin bonded abrasive tool which the life of abrasive tool is long. Next, it is explained a resin bonded abrasive tool 30 by the second modification of this example , referring to the appended drawings.
Figure 5 is an enlarged sectional view of a principal part showing resin bonded abrasive tool 30 of the second modification in this example and Figure 6 shows the particle diameter distribution of non -uniform amorphous carbon which is a filler shown in Figure 5. Table 2 shows a particle distribution of non-uniform amorphous carbon shown in Figure 6 . This resin bonded abrasive tool 30 , for example, is formed as a cup type abrasive tool for miller grinding of hard and brittle materials. The abrasive particle layer 31 is constructed from a resin binder phase 14 and a super abrasive particle 15 of diamond (or cBN etc. ) distributed in this resin binder phase 14, and also amorphous carbon as filler 36 is distributed in a resin binder phase 14 .
The filler 36 including resin binder phase 14 ,for example, consist of non-uniform shape amorphous carbon, for example, as shown in Table 1 and in Figure 10. It is prepared by grinding spherical amorphous carbon having a particle diameter of about 20 ∼ 30 µm. The particle diameter of non-uniform shape amorphous carbon as the filler 36 is made preferably as 20 µm or less, the average particle diameter is made preferably as 4.0 µm.
When the particle diameter of filler 36 is less than 0.1 µm , the effect which reduces the grinding resistance and controls generating of grinding heat, and the effect of increasing wear resistance are weak. Conversely, when the particle diameter of filler 36 exceeds 20 µm , the distributed pitch of amorphous carbon will be extended, and the contact length between work and resin will increase, and the increase of grinding resistance will be brought. The total amount of filler 36 is made into 5∼60 vol % by the volume ratio of resin binder phase 14 except super abrasive particle 15 of abrasive particle layer 31 for example . Here , when the quantity of filler 36 is less than 5 vol % , the effect by containing the filler 36 , for example, the reducing of grinding heat by grinding resistance and the increasing of wear resistance are not enough . Moreover , if the quantity of filler 36 exceeds 60 vol % ,the rate of resin binder phase 14 occupied in abrasive particle layer 31 will decrease, and the strength of abrasive particle layer 31 decreases sharply , the wear resistance of abrasive particle layer 31 decreases.
In this resin bonded abrasive tool 30 , the non-uniform amorphous carbon is distributed in resin binder phase 14 of abrasive particle layer 31 as filler 36. This filler 36 , for example , is formed by crushing prcticaly spherical amorphous carbon having a particle diameter of 20 ∼ 30µm , the particle diameter is preferably 20µm or less. Therefore , the affinity with the resin binder phase 14 is high , and the residual ability within abrasive particle layer 31 is high. As a result, the frictional resistance between working face at a time of grinding machining and the surface of abrasive particle layer 31 can be suppressed , the lubricity the resin binder phase 14 for work material will be secured , and the rise of grinding heat can be controlled , and also the wear resistance of abrasive particle layer 31 can be increased. And the amorphous carbon is the most minute at the spherical shape ,and the minute and small and non-uniform shape amorphous carbon can be obtained by crushing this spherical shape amorphous carbon.
Next , the grinding examination which followed this resin bonded abrasive tool 30 is explained . In resin bonded abrasive tool 30 of this grinding examination , the phenol resin was used as resin binder phase 14 of abrasive particle layer 11, and the diamond abrasive particle having a mean particle diameter of 3 ∼ 8 µm as the super abrasive particle 15 was distributed in this resin binder phase 14. The filler 36 was added as a volume ratio of 35 vol % to the resin binder phase 14 ( phenol resin ) .
In comparative example 1, the CaF2 has a mean particle diameter of about 2 µm as the filler 36 . In comparative example 2 , the hBN having a mean particle diameter of about 3 µm was used as filler, and in comparative example 3, the graphite (crystal carbon) having a mean particle diameter of about 7 µm was used as filler . In comparative example 4, as shown in Table 1 and Figure 10 , the spherical shape amorphous carbon having a mean particle diameter of about 20 ∼ 30µm was used as filler . In the example, as shown in Table 2 and Figure 6 , the non-uniform shape amorphous carbon formed by crushing spherical amorphous carbon of comparative example 4 having a mean particle diameter of 20 µm or less was used as filler In the grinding examination , the amount of wear of the resin bonded abrasive tool 30 at the time of performing the miller grinding of silicon wafer was measured at comparative example 1, 2,3,4 and the example. The measured results are shown in Figure 7 and Figure 8 . In addition , in Figure 7 and Figure 8 , the measurement results of the wear ratio to CaF2 were shown for comparative example 2, 3, 4 and the example as that the amount of wear in CaF2 of comparative example 1 is 1 . From the results shown in Figure 7 , the wear resistance of resin bonded abrasive tool 30 can be raised by using the non-uniform shape amorphous carbon compared with the case where CaF2, hBN, Graphite (crystal carbon ) were used as filler . Furthermore , from the results shown in Figure 8 , the wear resistance of resin bonded abrasive tool 30 can be raised by using the non-uniform shape amorphous carbon having a mean particle diameter of 20 µm or less obtained by crushing the spherical shape amorphous carbon compared with the case where the spherical shape amorphous carbon having a mean particle diameter of about 20 ∼30µm as filler . In addition , in above mentioned explanation , it is shown the example that the resin bonded abrasive tool 10 , 20 , 30 according to this invention was used to the miller grinding .
However, it is not limited to this case , the resin bonded abrasive tool 10, 20, 30 according to this invention may adopt to other kinds of grinding .

## Claims

1. Resin bonded abrasive tool, wherein super abrasive particles and amorphous carbon are distributed in a resin binder phase, **characterized in that** the amorphous carbon has non-uniform shape, a particle diameter of 20 µm or less, and a hardness of Hs = 100 - 200 in shore hardness scale, and wherein the amorphous carbon is contained in an amount of 5 - 60 vol% with respect to the total volume of the amorphous carbon and the resin binder phase (except super abrasive particles).

2. The resin bonded abrasive tool according to claim 1 **characterized in that** the non-uniform shape amorphous carbon is prepared by crushing spherical shape amorphous carbon.

3. The resin bonded abrasive tool according to claim 1 or 2 **characterized in that** any kind of metal of Cu, Ag, Ni, Co, or the alloy of such metals is coated on the surface of the amorphous carbon.

4. The resin bonded abrasive tool according to any of claims 1 to 3 **characterized in that**, additionally, a wear resistant filler is distributed in the resin binder phase.

5. The resin bonded abrasive tool according to claim 4 **characterized in that**, the wear resistant filler is selected from SiC, SiO₂, Ag, Cu, Ni.

6. The resin bonded abrasive tool according to any of the claims 1 to 3 **characterized in that**, additionally, a lubricative filler is distributed in the resin binder phase.

7. The resin bonded abrasive tool according to claim 6 **characterized in that** the lubricative filler is selected from graphite, hBN, fluoro-resin.

8. The resin bonded abrasive tool according to any of the claims 1 to 7 **characterized in that** pores of 5 - 40 vol% with respect to the total volume of the pores and the resin binder phase (except super abrasive particles).

9. The resin bonded abrasive tool according to any of the claims 1 to 7 **characterized in that**, additionally, a hollow glass is distributed in the resin binder phase.

## Patentansprüche

1. Harzgebundenes Schleifwerkzeug, worin superabrasive Teilchen und amorpher Kohlenstoff in einer Harzbinderphase verteilt sind, **dadurch gekennzeichnet, dass** der amorphe Kohlenstoff eine ungleichförmige Form, einen Teilchendurchmesser von 20 µm oder weniger und eine Härte von Hs = 100-200 der Shore-Härteskala aufweist und worin der amorphe Kohlenstoff in einer Menge von 5-60 Vol.% in bezug auf das Gesamtvolumen des amorphen Kohlenstoffs und der Harzbinderphase (ohne superabrasive Teilchen) enthalten ist.

2. Harzgebundenes Schleifwerkzeug gemäss Anspruch 1, **dadurch gekennzeichnet, dass** der amorphe Kohlenstoff mit ungleichförmiger Form hergestellt wird durch Zerbrechen von amorphem Kohlenstoff mit sphärischer Form.

3. Harzgebundenes Schleifwerkzeug gemäss Anspruch 1 oder 2, **dadurch gekennzeichnet, dass** ein beliebiges Metall, ausgewählt aus Cu, Ag, Ni, Co oder Legierungen aus diesen Metallen, auf der Oberfläche des amorphen Kohlenstoffs aufgeschichtet ist.

4. Harzgebundenes Schleifwerkzeug gemäss mindestens einem der Ansprüche 1 bis 3, **dadurch gekennzeichnet, dass** zusätzlich ein abriebbeständiger Füllstoff in der Harzbinderphase verteilt ist.

5. Harzgebundenes Schleifwerkzeug gemäss Anspruch 4, **dadurch gekennzeichnet, dass** der abriebbeständige Füllstoff ausgewählt ist aus SiC, SiO₂, Ag, Cu, Ni.

6. Harzgebundenes Schleifwerkzeug gemäss mindestens einem der Ansprüche 1 bis 3, **dadurch gekennzeichnet, dass** zusätzlich ein Gleitmittelfüllstoff in der Harzbinderphase verteilt ist.

7. Harzgebundenes Schleifwerkzeug gemäss Anspruch 6, **dadurch gekennzeichnet, dass** der Gleitmittelfüllstoff ausgewählt ist aus Graphit, hBN und Fluorharz.

8. Harzgebundenes Schleifwerkzeug gemäss mindestens einem der Ansprüche 1 bis 7, **dadurch gekennzeichnet, dass** die Poren 5-40 Vol.%, bezogen auf das Gesamtvolumen der Poren und der Harzbinderphase (ohne superabrasive Teilchen), ausmachen.

9. Harzgebundenes Schleifwerkzeug gemäss mindestens einem der Ansprüche 1 bis 7, **dadurch gekennzeichnet, dass** zusätzlich Glashohlkörper in der Harzbinderphase verteilt sind.

## Revendications

1. Outil abrasif lié par une résine, dans lequel des particules fortement abrasives et du carbone amorphe sont répartis dans une phase de liant de résine, **caractérisé en ce que** le carbone amorphe présente une forme non uniforme, un diamètre de particules de 20 µm ou moins, et une dureté Hs = 100 à 200 suivant une échelle de dureté Shore, et dans lequel le carbone amorphe est contenu suivant une proportion de 5 à 60 % en volume par rapport au volume total du carbone amorphe et de la phase de liant de résine (à l'exception des particules fortement abrasives).

2. Outil abrasif lié par une résine selon la revendication 1, **caractérisé en ce que** le carbone amorphe de forme non uniforme est préparé en écrasant du carbone amorphe de forme sphérique.

3. Outil abrasif lié par une résine selon la revendication 1 ou 2, **caractérisé en ce qu'**un type quelconque de métal correspondant à du Cu, de l'Ag, du Ni, du Co, ou un alliage de tels métaux est appliqué sur la surface du carbone amorphe.

4. Outil abrasif lié par une résine selon l'une quelconque des revendications 1 à 3 **caractérisé en ce que**, en outre, une charge résistant à l'usure est répartie dans la phase de liant de résine.

5. Outil abrasif lié par une résine selon la revendication 4 **caractérisé en ce que**, la charge résistant à l'usure est sélectionnée à partir de SiC, SiO₂, Ag, Cu, Ni.

6. Outil abrasif lié par une résine selon l'une quelconque des revendications 1 à 3 **caractérisé en ce que**, en outre, une charge de lubrification est répartie dans la phase de liant de résine.

7. Outil abrasif lié par une résine selon la revendication 6 **caractérisé en ce que** la charge de lubrification est sélectionnée à partir de graphite, de hBN, de résine fluorée.

8. Outil abrasif lié par une résine selon l'une quelconque des revendications 1 à 7, **caractérisé en ce que** des pores sont inclues suivant 5 à 40 % en volume par rapport au volume total des pores et de la phase de liant de résine (à l'exception des particules fortement abrasives).

9. Outil abrasif lié par une résine selon l'une quelconque des revendications 1 à 7 **caractérisé en ce qu'**en outre, un verre creux est réparti dans la phase de liant de résine.
